# EUROPEAN PATENT SPECIFICATION

(11) **EP 0 734 301 B1**
(45) Date of publication and mention of the grant of the patent: **29.07.1998**
(21) Application number: 94917238.1
(22) Date of filing: 25.05.1994
(51) Int. Cl.: B23C 5/20, B23C 5/24, B23B 27/16

(54) **ROUNDED CUTTING INSERT**
ABGERUNDETER SCHNEIDEINSATZ
PIECE RAPPORTEE COUPANTE, ARRONDIE

(30) Priority: 26.05.1993 SE 9301790
(43) Date of publication of application: 02.10.1996
(73) Proprietor: SANDVIK AKTIEBOLAG, 811 81 Sandviken (SE)
(72) Inventor: WERNER, Heinz, S-802 38 Gävle (SE); ALMERSAND, Ake, S-810 22 Arsunda (SE)
(86) International application number: PCT/SE94/00487
(87) International publication number: WO 94/27774

(56) References cited:
- WO-A-92/21472
- DE-A- 2 854 299
- DE-A- 2 950 698
- DE-A- 3 402 547
- US-A- 5 123 787
- DERWENT'S ABSTRACT, No. B4771, J/51, week 8251; & SU,A,904 900, (ROST MECH ENG TECHN), 15 February 1982.

## Description

The present invention relates to a cutting insert according to the precharacterising portion of claim 1 and starting from WO 92/21472 as comprising the closest prior art intended to be carried by a cartridge in a rotatable milling cutter body, whereby a major part of the periphery of the cutting insert is round.

Milling cutter tools are generally known in which insert-carrying cartridges are placed around the peripheral envelope surface. Depending upon how many cutting inserts the cutter body comprises, it is denoted as a coarse, close or extra-close pitch milling cutter. At face- and square shoulder milling in for instance the motor industry, a very precise positioning of the cutting edges is required, both in absolute terms and relatively to the other cutting edges in the milling cutter. Thus, the axial height difference between two cutting edges should not exceed a few µm in order to attain the required surface smoothness.

In the Swedish patent application 9301399-3 a construction is described for attaining a very accurate axial and radial position of the cutting edges in a milling cutter. According to that application, a milling cutter primarily for aluminum machining is formed with grooves milled in the envelope surface, in which grooves are mounted insert-carrying cartridges and spacer plates. These cartridges and spacer plates include serrated surfaces for mutually independent fine adjustment axially and radially.

Besides axial and radial adjustment, also the so called angle of the parallel land has to be finely adjusted because this angle also has a great importance for the achieved surface smoothness. The angle of the parallel land is defined as the angle between the cutting edge of the parallel land and the produced surface on the work-piece. In order to make possible an adjustment of the angle of the parallel land, according to prior art the cutting insert has been mounted in a so called cradle, which in its turn can be turned until the desired angle of the parallel land has been attained, see for instance DE-C-3 140 905. However, this construction has the inconvenience that it comprises a number of separate parts and thus is rather complicated. Furthermore, the axial fine adjustment of the cutting insert is rendered difficult, since a further boundary line is created, viz. the line between cradle and cartridge. Moreover, such constructions cause instability because separate parts are mounted upon another in order to make possible a fine adjustment of the cutting inserts, whereby measure tolerances are superposed.

Thus, one object of the present invention is to make possible a quick and accurate fine adjustment of the angle of the parallel land of each cutting insert.

Another object of the present invention is to make possible an adjustment of the angle of the parallel land with as few separate parts as possible.

A further object of the present invention is to permit a movement of the cutting insert in its insert pocket without altering the preset clamping force, which is of utmost importance for a safe and stable positioning of the insert in the insert pocket.

These and other objects have been achieved by forming the cutting insert with the features as defined in claim 1.

For illustrative but non-limiting purposes, the invention will now be further described in connection with the appended drawings which show a preferred embodiment .

Figure 1 shows a cutting insert according to the invention in a perspective side view from above.

Figure 2 shows a preferred embodiment of the cutting insert according to the invention in a perspective side view from above.

Figure 3 illustrates the mounting of the cutting insert of Fig. 2 into a cartridge.

Figure 4 shows another preferred embodiment of the cutting insert according to the invention in a perspective side view from above.

Figure 5 illustrates the mounting of the cutting insert of Fig. 4 into a cartridge.

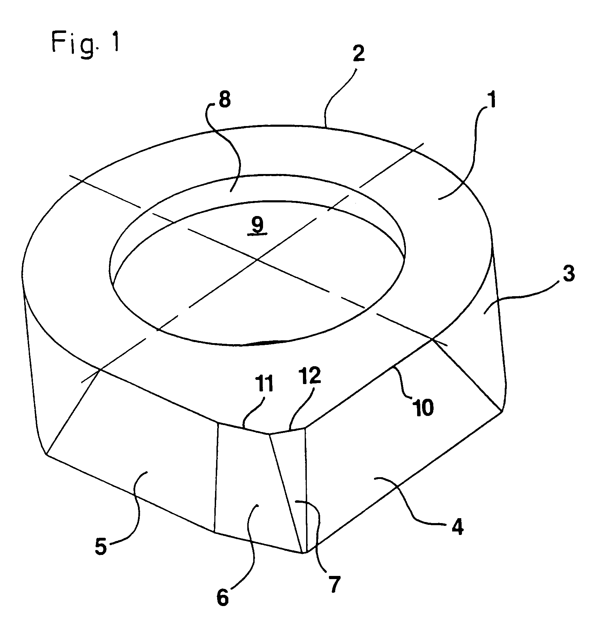

Fig. 1 shows in general a cutting insert according to the invention. It can be made of cemented carbide or any other hard material, for instance different sorts of ceramics. It can also comprise an inlay of a special hard material in the operative cutting corner, such as polycrystalline diamond or cubic bore nitride. If the cutting plate is of cemented carbide, it can be non-coated or coated, for instance with one or several layers of titanium carbide and/or titanium nitride, or with a layer of polycrystalline diamond. Further, a cutting plate of cemented carbide can be either ground or directly pressed into the desired final shape. Its IC-measure (i.e., the size of the inscribed circle) is usually between 10 and 15 mm and its thickness between 3,5 and 6 mm.

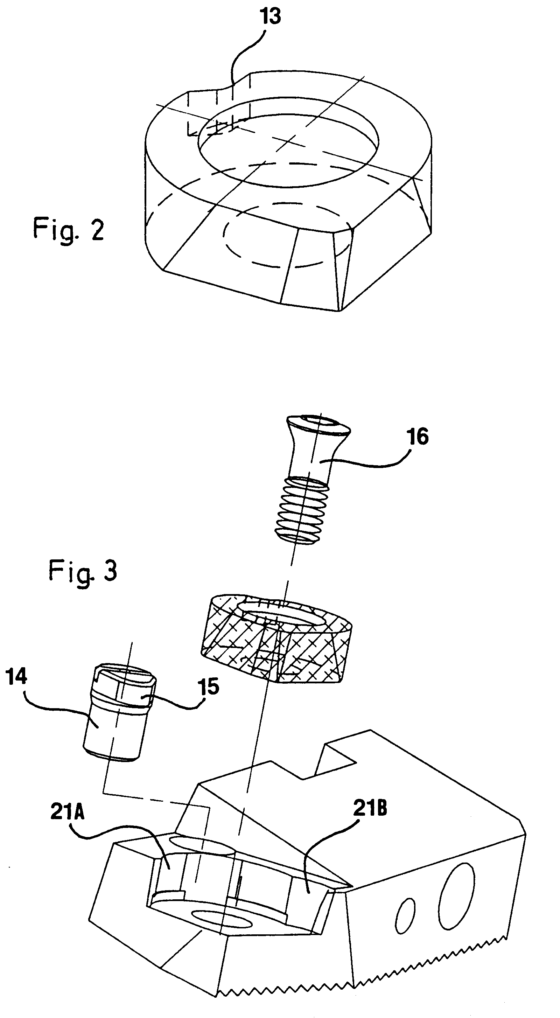

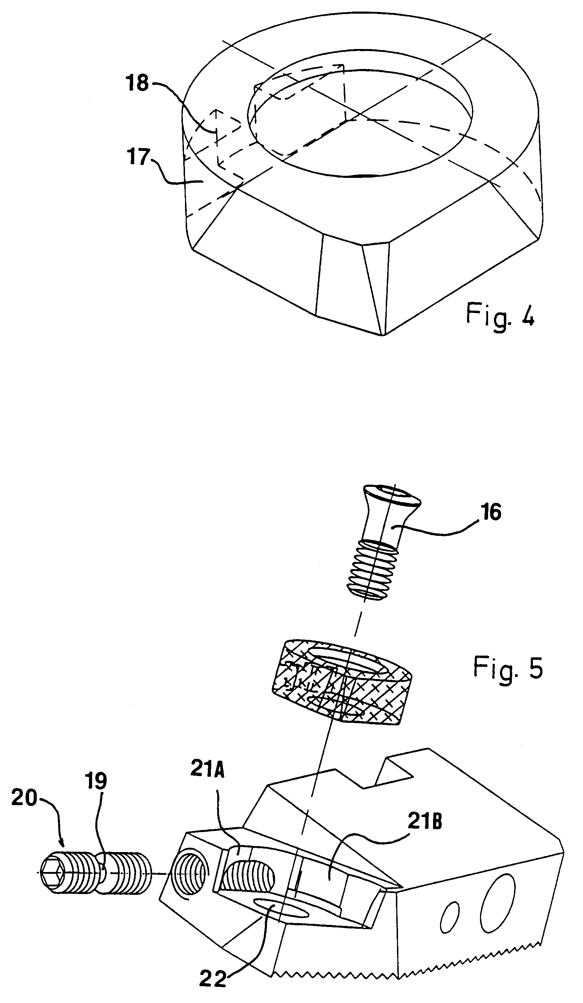

The cutting insert comprises an upper chip surface 1 and a bottom surface being substantially plane-parallel to the chip surface 1, this bottom surface being intended to rest upon a bottom support surface in an insert pocket, as illustrated in Fig. 3 and 5, and edge surfaces extending between these two surfaces. About 3/4 of the edge surface consists of the substantially circle-round edge surface 3, which is substantially perpendicular to the upper chip surface 1 and to the bottom surface. The remaining fourth of the insert's periphery consists essentially of the mutually substantially perpendicular surfaces 4 and 5. Surface 4 is the clearance surface under the main cutting edge 10, whereby the edge angle between chip surface 1 and clearance surface 4 suitably is between 70 and 90°, preferrably between 75 and 85°. The angle between surface 5 and chip angle 1 can also suitably lie within said ranges.

On the side surface between surfaces 4 and 5 the cutting insert is formed with a plane land 6 with pertaining secondary cutting edge 11. Suitably, the cutting edge angle of the secondary cutting edge 11 is also within said ranges. The angle between this secondary cutting edge and the surface produced on the work-piece constitutes the angle of the parallel land, whose accurate adjusting is a main purpose of the present invention. Between the plane parallel land 6 and the clearance surface 4 a reinforcing chamfer 7 can be formed, in order to reinforce the cutting corner being exposed to stress, whereby a minor secondary cutting edge 12 is created. The cutting edge angle of the latter is suitably between 65 and 90°, preferrably between 70 and 80°. The angle between surfaces 5 and 6 is suitably between 176 and 179,5°.

A through-hole is provided in the centre of the cutting insert for the insertion of a suitable locking screw. The upper part 8 of the hole is formed substantially cylindrically, while the remaining part of the hole tapers downwardly by a convexly vaulted surface 9.

The cutting insert according to Fig. 2 is the same as in Fig. 1 with the exception of a recess 13 in the curved side surface 3. This recess 13 does not have to be through-going but can extend to for instance between a third and the half of the total thickness of the cutting insert. An adjustment pin 14 with a protruding adjustment nose 15 can be arranged in the cartridge according to Fig. 3. The adjustment nose 15 is brought to intrude into recess 13, whereby a rotation of the adjustment pin with for instance a screw driver, results in a rotating movement also of the cutting insert, after the locking screw 16 having been loosened somewhat, and thereby also in an adjustment of the angle of the parallel land. After an exact positioning, the adjustment pin is suitably removed, before the milling cutter is brought into rotation. Alternatively, the adjustment pin 14 can be formed as an integrated end part of driver tool's handle.

In Fig. 4 and 5 another embodiment is illustrated for the fine adjustment of the angle of the parallel land. The cutting insert according to Fig. 4 is the same as in Fig. 1 with the exception of a split groove 17 having been made in the curved edge part 3 of the cutting insert. A driver part 18 is formed at about the middle of said groove's extension, which driver part is intended to intrude into the circular waist part 19 of an adjustment screw 20. Thus, after having loosened somewhat the locking screw 16, the cutting insert can be rotated around its centre axis by turning adjustment screw 20, whereby the angle of the parallel land is fine-adjusted. The adjustment is surveyed optically or by a so called thousandth gauge.

The cutting insert pocket is preferrably arranged with two side support zones 21A, 21B, which are provided with fillets down in their lower parts, along the break line to the bottom support surface. These side support zones are intended as abutment surfaces against the cutting insert and have a curvature which substantially coincides with the side surface 3 of the cutting insert. When the cutting insert abuts against the support zones 21A, 21B, the centre axis of the insert's hole should be positioned on a somewhat larger distance from said support zones than the centre axis of the hole 22 of the holder. By the present invention this distance, or this eccentricity, can be held constant by the fact, that the cutting insert is provided with the circle-round side surface 3 which rests against the two side support zones 21A and 21B. This is of utmost importance for a satisfactory functioning when the support surfaces of the cutting insert are to be pressed into the insert pocket and guarantee a good positioning of the insert and a stable locating. By the mentioned eccentricity, a stabilizing abutting pressure is obtained between the cutting insert and the side support zones when the locking screw 16 is tightened.

By the thus described construction, the angle of the parallel land has been optimized for the attainment of very smooth surfaces on, e.g., aluminum.

## Claims

1. Cutting insert comprising an upper chip surface (1), a bottom surface being substantially plane-parallel with the chip surface, and side surfaces (3, 4, 5, 6, 7) extending between those surfaces, the periphery of the cutting insert comprises two mutually substantially perpendicular side surfaces (4, 5), whereby a part of one of the two side surfaces adjacent the corner between them, forms a parallel land (6) and is inclined so that it forms an obtuse angle with both said side surfaces,
**characterized** in that about 3/4 of the periphery of the cutting insert is substantially circle round.

2. Cutting insert according to claim 1,
**characterized** in that the corner between the parallel land (6) and one of the side surfaces (4) is formed with a reinforcing chamfer (7).

3. Cutting insert according to claim 1,
**characterized** in that the part of the one side surface that forms the parallel land (6) constitutes between 20 and 40 % of the total original length of said side surface (5).

## Patentansprüche

1. Schneideinsatz mit einer oberen Spanfläche (1), einer Bodenfläche, die im wesentlichen planparallel zu der Spanfläche ist, und Seitenflächen (3, 4, 5, 6, 7), die sich zwischen jenen Flächen erstrecken, wobei der Umfang des Schneideinsatzes zwei zueinander im wesentlichen senkrechte Seitenflächen (4, 5) umfaßt und ein Teil einer dieser beiden Seitenflächen in Nachbarschaft zu der Ecke zwischen ihnen eine Parallelfläche (6) bildet und derart geneigt ist, daß er einen stumpfen Winkel mit diesen beiden Seitenflächen bildet, **dadurch gekennzeichnet**, daß etwa drei Viertel des Umfangs des Scheideinsatzes im wesentlichen kreisrund sind.

2. Schneideinsatz nach Anspruch 1, **dadurch gekennzeichnet**, daß die Ecke zwischen der Parallelfläche (6) und einer der Seitenflächen (4) mit einer verstärkenden Abfasung (7) ausgebildet ist.

3. Schneideinsatz nach Anspruch 1, **dadurch gekennzeichnet**, daß der Teil der einen Seitenfläche, der die Parallelfläche (6) bildet, zwischen 20 und 40 % der ursprünglichen Gesamtlänge der Seitenfläche (5) ausmacht.

## Revendications

1. Plaquette de coupe comprenant une face d'enlèvement des copeaux supérieure (1), une face inférieure qui est pratiquement dans un plan parallèle à la face d'enlèvement des copeaux, et des faces latérales (3, 4, 5, 6, 7) s'étendant entre ces surfaces, la périphérie de la plaquette de coupe comprenant deux surfaces latérales pratiquement perpendiculaires entre elles (4, 5), dans laquelle une partie de l'une des deux faces latérales adjacentes au coin formé entre elles forme un listel parallèle (6) et est orientée de façon à former un angle obtus avec les deux dites surfaces latérales, caractérisée en ce qu'environ les trois-quarts de la périphérie de la plaquette de coupe sont arrondis pratiquement en forme de cercle.

2. Plaquette de coupe selon la revendication 1, caractérisée en ce que le coin formé entre le listel parallèle (6) et l'une des faces latérales (4) est munie d'un chanfrein de renforcement (7).

3. Plaquette de coupe selon la revendication 1, caractérisée en ce que la partie de la face latérale (5) formant listel parallèle (6) représente entre 20 et 40 % de la longueur totale d'origine de ladite face latérale (5).
